Europäisches Patentamt

European Patent Office

Office européen des brevets

(19)

(11) Publication number: **0 586 703 A1**

## EUROPEAN PATENT APPLICATION
## published in accordance with Art.
## 158(3) EPC

(12)

(21) Application number: 92916589.2

(22) Date of filing: 23.07.92

(86) International application number:
PCT/JP92/00936

(87) International publication number:
WO 93/16823 (02.09.93 93/21)

(51) Int. Cl.5: **B21D 7/16**, C21D 8/10

(30) Priority: 21.02.92 JP 70006/92
21.02.92 JP 70007/92

(43) Date of publication of application:
16.03.94 Bulletin 94/11

(84) Designated Contracting States:
BE GB

(71) Applicant: NKK CORPORATION
1-2, Marunouchi 1-chome
Chiyoda-ku
Tokyo 100(JP)

(72) Inventor: KONDO, Joh, NKK Corporation
1-2, Marunouchi 1-chome,
Chiyoda-ku
Tokyo 100(JP)
Inventor: UME, Kazuyoshi, NKK Corporation
1-2, Marunouchi 1-chome,
Chiyoda-ku
Tokyo 100(JP)
Inventor: TAKAGISHI, Masaaki, Dai-Ichi High

Freq. Co., Ltd.
Techn. Div.,
8-3, Tonomachi 2-chome,
Kawasaki-ku
Kawasaki-shi, Kanagawa-ken 210(JP)
Inventor: SHIRAISHI, Tatsumi, Dai-Ichi High
Freq. Co., Ltd.
Chiba Works,
8, Tsukiji
Kisarazu-shi, Chiba-ken 292(JP)
Inventor: HIDAKA, Yoshinobu, Dai-Ichi High
Freq. Co., Ltd.
Chiba Works,
8, Tsukiji
Kisarazu-shi, Chiba-ken 292(JP)

(74) Representative: Sajda, Wolf E., Dipl.-Phys. et
al
MEISSNER, BOLTE & PARTNER
Postfach 86 06 24
D-81633 München (DE)

(54) METHOD OF MANUFACTURING BENT PIPE OF HIGH TENSILE STEEL.

(57) A method of manufacturing a bent pipe, in which a straight pipe of high tensile steel consisting of low alloy steel containing 0.08 percent weight of C or lower or a straight clad pipe composed of said low alloy steel at the outer part and high anti-corrosive alloy at the inner part is heated to a temperature not lower than $Ac_3$ point of the low alloy steel, bent at said temperature, hardened starting at the above temperature immediately after bent, and tempered at a temperature ranging from 250 to 500 °C, thereby being turned into a final product.

Rank Xerox (UK) Business Services
(3.10/3.09/3.3.4)

F I G. 4

[Technical Field]

The present invention relates to a method of manufacturing a bend pipe made of high tensile strength steel having high tensile and high toughness.

[Background Art]

As a means for transportation of oil or natural gas, a pipeline is used. Since steel material for a line pipe is generally regulated to the API standard of X50 to X80 and the like and is required to have a DWTT property under - 10°C or less, it is necessary to ensure low temperature toughness under - 60°C or less in terms of the fracture appearance transition temperature (vTrs) in the Charpy impact test. The pipeline comprises a straight portion as well as a bend pipe portion used for changing the direction of transportation and adjusting expansion and shrinkage accompanying a change in temperature of the straight pipe portion. In recent years, with the accelerating development of natural resources under severe circumstances, it has been necessary to provide high tensile strength steel made of a low alloy exhibiting excellent strength and low temperature toughness containing a low carbon equivalent to the bend pipe portion as well as to the straight pipe portion in due consideration of weldability, hydrogen induced cracking, and sulfide stress corrosion crack.

In the case that the transporting oil or the natural gas contain a large content of hydrogen sulfide or carbonic acid gas, a clad bend pipe is required, outside of which the above-mentioned high tensile strength steel is disposed as a base material, and inside of which a high corrosion resistant alloy containing stainless steel is clad.

Heretofore, these bend pipes have been manufactured by a method in which a straight pipe is fed into a bending device continuously and then curved with heating while passing through a high frequency heated coil, or a method in which two axially bent plates of half circular cylinder form are welded together.

According to these methods, when steel having an X60 or upper grade in terms of the API5L standard is used, the curved pipe having completed the bending process is subjected to a quenching treatment (Q) followed by a tempering treatment (T) at a temperature of 550 to 650°C as described in Jpn. Pat. Appln. KOKOKU Publication No. 62-15154, or to the quenching treatment alone as described in Jpn. Pat. Appln. KOKAI Publication No. 63-76525, thereby obtaining the desired product.

However, as described in Jpn. Pat. Appln. KOKAI Publication No. 62-15154, when tempering is performed at a temperature of 550 to 650°C after the quenching treatment, high strength cannot be attained. In the case of a clad pipe using the above-mentioned high corrosion resistant alloy containing stainless steel as a clad material, chromium carbide and a sigma phase are precipitates in a matrix of the clad material, with the result that the corrosion resistance of the clad material deteriorates.

On the other hand, as described in Jpn. Pat. Appln. KOKOKU Publication No. 63-76525, in the case of the curved pipe manufactured by quenching alone, high tensile strength (TS) can be obtained with a low carbon equivalent, however, the yield point does not appear due to quenching alone, with the result that the yield stress (YS) is lowered. As the pipe thickness increases, the cooling rate decreases at the time of quenching. Therefore, even if TS is obtained at a desired value, YS does not reach a desired value, and the low temperature toughness is lowered.

[Disclosure of the Invention]

The object of the present invention is to provide a method of manufacturing a bend pipe made of high tensile strength steel improved in strength and toughness.

The another object of the present invention is to provide a method of manufacturing a bend pipe made of high tensile strength steel having high strength, high toughness, and high corrosion resistance, wherein the bend pipe is composed of a clad pipe, outside of which the low alloy steel and inside of which corrosion resistant alloy, are disposed.

In one aspect of the present invention, there is provided a method of manufacturing a bend pipe made of high tensile strength steel, comprising steps a) to e) below.

a) a step of preparing a straight pipe, in which at least the outside portion thereof is formed by low alloy steel having the C content of 0.08% or less by weight.

b) a step of heating the straight pipe to a temperature of the $Ac_3$ point or more of the low alloy steel,

c) a step of obtaining a bend pipe by bending the straight pipe at the above-mentioned heating temperature,

d) a step of quenching the bend pipe from the above-mentioned heating temperature immediately after the bending step, and

e) a step of tempering the quenched bend pipe at a temperature in the range of 250 to 500°C.

In second aspect of the present invention, there is provided a method of manufacturing a bend pipe made of high tensile strength steel, wherein the outside portion of the above-mentioned straight pipe is made of high tensile strength steel made of low alloy steel having the C content of 0.08% or less by weight and the inside portion of the above-mentioned straight pipe is a clad pipe made of high corrosion resistant alloy, and the heating is performed at a temperature of 900 to 1,150°C.

The low alloy steel used in the present invention contains 0.02 to 0.08% of C, 0.05 to 0.5% of Si, 0.8 to 2.0% of Mn, 0.01 to 0.06% of Nb, 0.01 to 0.06% of Al, and 0.002 to 0.01% of N by weight and the balance of iron and inevitable impurities.

Further the low alloy steel may contain at least one selected from the group consisting of 0.5% of Cu, 1.0% or less of Ni, 0.3% or less of Cr, 0.3% or less of Mo, 0.1% or less of V, 0.05% or less of Ti, and 0.0002 to 0.01% of Ca.

Further, as the above-mentioned high corrosion resistant steel, either austenitic stainless steel, duplex stainless steel, or ASTM UNS No. N08825 (825 alloy) can be used.

[Description of the Drawings]

Fig. 1 is a graph showing the relationship between the C content of the low alloy steel and TS, and between the C content and vTrs,

Fig. 2 is a graph summarizing the change in material depending on tempering temperatures,

Fig. 3 is a graph showing the relationship between the carbon equivalent Ceq and TS, and between Ceq and vTrs,

Fig. 4 is a plan view showing an example of manufacturing apparatus of a curved pipe, and

Fig. 5 is a graph showing the influence of the tempering temperature on the intergranular corrosion resistance of solution-treated 316L and 825 alloy.

[Best Mode of Carrying out the Invention]

The present inventors have made intensive and extensive studies with a view toward solving the above-described problems associated with conventional methods. As a result, they found that a bend pipe having high yield strength and excellent toughness can be obtained by lowering a carbon equivalent of low alloy high tensile strength steel, by bending following heating principally at $Ac_3$ point or more, and immediately subjected to quenching, followed by tempering at a temperature lower than that of conventional methods, i.e., 250 to 500°C. They further found that the method of the present invention can be applied to form a clad bend pipe, outside of which the above-mentioned low alloy high tensile strength steel is disposed as a base material and inside of which high corrosion resistant stainless steel is disposed as a clad material. The present invention comprising the above-mentioned constitution is accomplished based on these findings.

In the bend pipe made of high tensile strength steel of the present invention, use is made of low alloy steel containing carbon steel mainly comprising C, Si, Mn, Al, and the like, and alloy elements such as Nb, Cu, Ni, Cr, Mo, V, Ti, and the like in 5% or less by weight in total for the purpose of improving strength and toughness. The reason why the low alloy steel is used as a line pipe material is that the material is less expensive due to the large amount of usage and the line pipe requires high strength.

Hereinbelow, percentages describing the amount of the alloy are indicated in terms of weight %.

As mentioned above, the method of manufacturing a bend pipe made of high tensile strength steel of the present invention comprises steps of:

preparing a straight pipe, at least the outside portion of which is formed of low alloy steel having the C content of 0.08% or less by weight,

heating the straight pipe to a temperature of the $Ac_3$ point or more of the low alloy steel,

obtaining a bend pipe by bending the straight pipe at the above-mentioned heating temperature,

quenching the bend pipe from the above-mentioned heating temperature immediately after the bending step, and

tempering the quenched bend pipe at a temperature in the range of 250 to 500°C.

In this case, the straight pipe may be composed of the above-mentioned low alloy alone or may be a clad pipe, the outside portion of which is made of the low alloy steel and the inside portion of which is made of high corrosion resistant alloy. When the clad pipe is employed, the heating temperature in the bending step is set in the range of 900 to 1,150°C.

The reasons why the method of the present invention comprises the above-mentioned steps are:

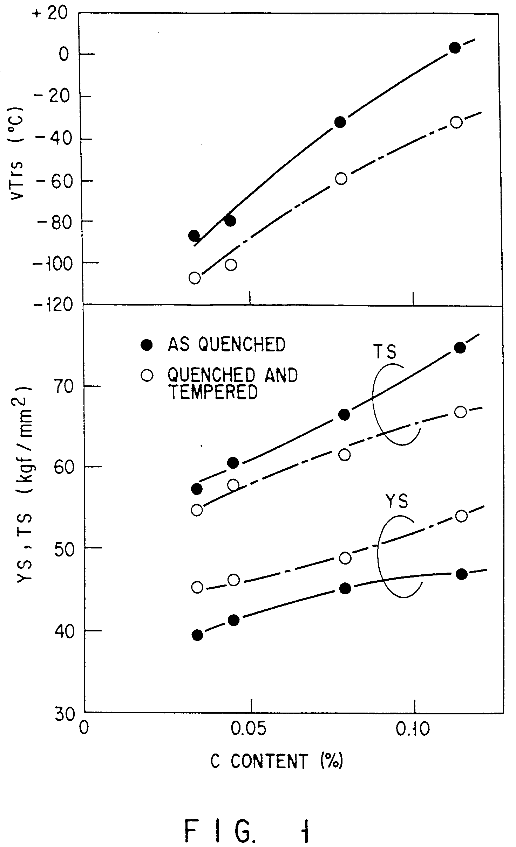

(1) obtaining the hardened structure of fine bentonite or a mixed structure of bentonite and ferrite by lowering hardenability by adjusting the C content of the high tensile strength steel made of low alloy steel to 0.08% or less and adding Nb and the like thereto. The decrease in the strength due to the low C content is compensated by increasing the content of Mn or the above-mentioned alloy elements. The reason for defining the C percentage to 0.08% or less is to obtain the low temperature toughness vTrs at a value of - 60°C or less as is apparent from Fig. 1 will be described later.

(2) improving the strength of the low alloy steel used in the straight pipe by heating to a temperature of the $Ac_3$ point or more, bending the pipe at the same temperature, and immediately cooling in a high rate thereafter. In the clad bend pipe, the clad material is Solution-treated with the heating, with the result that corrosion resistance is improved.

(3) improving YS and the toughness of the low alloy steel by the tempering treatment as the final step at a temperature of 250 to 500°C. In the case that a clad pipe made of a high corrosion resistant alloy is tempered at the above-mentioned temperature, no carbide is precipitated. Therefore, corrosion resistance is not damaged.

Hereinafter we will explain in detail.

Fig. 1 shows the influence of the carbon content on YS, TS, and vTrs with respect to the C - Mn - Nb - V type steel having 25 mm in thickness after subjecting to the quenching treatment alone and to the quenching treatment followed by the tempering treatment.

In the quenching treatment step, the steel was held at 1,030°C for 1 minute and then performed quenching at an average cooling rate of 10°C/sec starting from 800°C until 400°C. In the tempering treatment, the steel was held at 400°C for 30 minutes, followed by cooling in air.

As is apparent from Fig. 1, YS and the toughness of the steels are improved by performing the tempering treatment at 400°C in comparison with the steels performed by the quenching alone.

Excellent toughness can be obtained by lowering the C content even if the tempering treatment is performed at a temperature as low as 400°C.

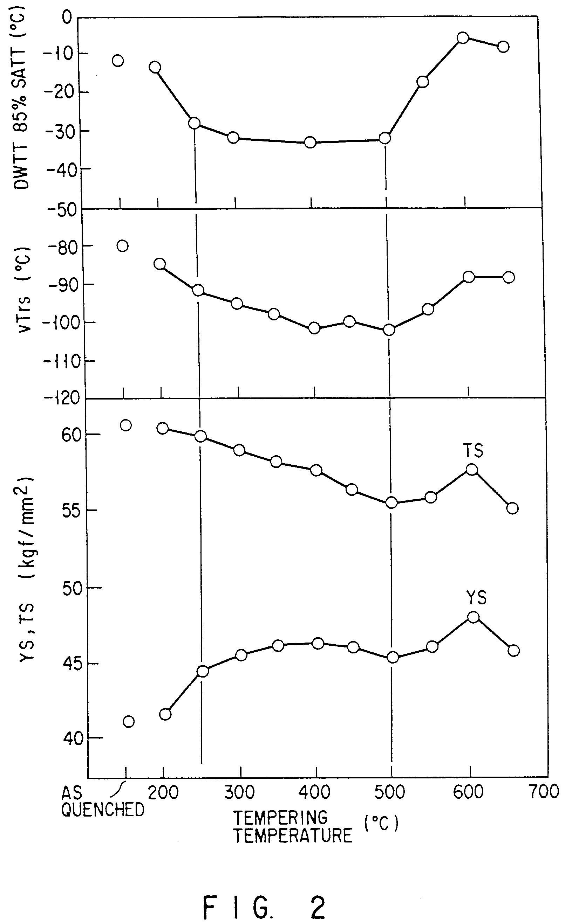

Fig. 2 shows the strength and the toughness with respect to the steel having the C content of 0.05% shown in Fig. 1 when the tempering following the quenching is conducted at various temperatures. The steel is composed of 0.33%, Si - 1.5%, Mn - 0.038%, Nb - 0.058%, V - 0.03%, Al - 0.0042%, and N. In the quenching treatment, the steel was allowed to stand still at 1,030°C for 1 minute, and then conducted quenching at an average cooling rate of 10°C/sec staring from 800°C until 400°C. In the tempering treatment, the steel was allowed to stand still at various temperatures of 200 to 650°C for 30 minutes, followed by cooling in air.

As is apparent from Fig. 2, YS increases at tempering temperatures from 250°C or more and more sharply increases due to the precipitation of the carbon nitride compound of Nb and V at temperatures of 550°C or more.

On the other hand, toughness increases with temperature up to 500°C, but decreases due to carbon nitride precipitation when the temperature exceeds 500°C. Especially, DWTT 85% SATT remarkably shows the above-mentioned tendency. At the temperatures of 550°C or more, the value of DWTT 85% SATT is equal to that of the temperature after quenching treatment alone or higher.

From the foregoing, by setting the tempering temperature to 500°C or less, which differs from conventional methods, the balance between the strength and the low-temperature toughness of low-carbon or low alloy high tensile strength steel can be obtained at more preferable value than that of the conventional methods in which quenching treatment alone is performed, and tempering following the quenching is performed at a temperature in the vicinity of 600°C.

However, toughness is improved by lowering the C content as shown in Fig. 1, but strength is decreases. Then, in the present invention, in order to increase strength, Mn, Mo, Cr, and V are added in a necessary content.

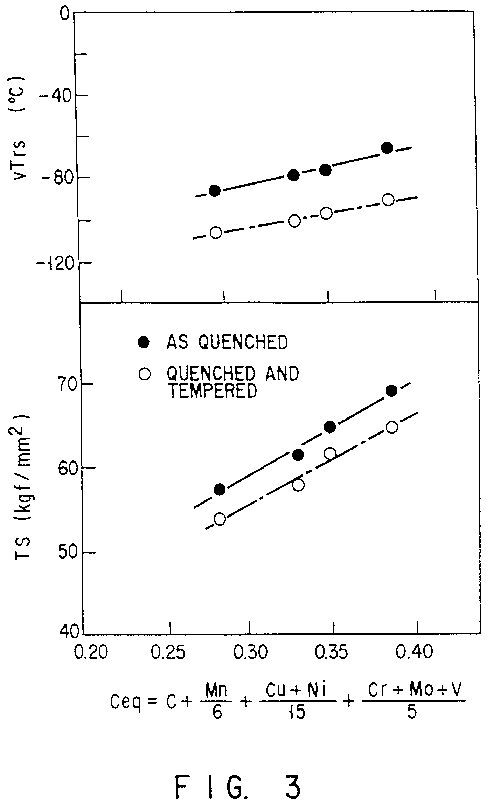

Fig. 3 is a graph showing the relationship between carbon equivalent Ceq and TS, and between Ceq and vTrs with respect to a steel plate of 25 mm in thickness having the C content of 0.08% or less when the steel is subjected to the quenching treatment alone and when it is subjected to quenching and then tempering at 400°C.

Ceq is defined by the following equation:

$$Ceq = C + Mn/6 + (Cu + Ni)/15 + (Cr + Mo + V)/5$$

It is apparent from Fig. 3, even though the carbon content decreases, if Ceq is kept above the predetermined value by adding other elements to the steel, it is possible to maintain the necessary strength.

The steel of the present invention is not limited as long as it is low alloy steel containing alloy elements in the range of 5% or less in total. The preferable contents of individual alloy elements are as follows:

C is to 0.08% or less.

As shown in Fig. 1, when the C content exceeds 0.08%, even if the steel is tempered at 400°C, the resultant toughness shows a vTrs value of - 60°C or more. There is not obtained the toughness as high as that obtained when the conventional QT-type bend pipe is tempered at 600°C. Therefore, the upper limit is specified to be 0.08%.

On the other hand, since the lower the carbon content becomes, the less strength becomes, the other elements must be supplied. From the economical point of view, the lower limit is desirable to be approximately 0.02%.

Si is desirably in the range of 0.05 to 0.5%.

Si has deoxidation effect. In order to obtain the effect, Si is preferable to be 0.05% or more. On the other hand, when the Si content exceeds 0.5%, the toughness deteriorates. Therefore, the Si content is preferably 0.5% or less.

Mn is desirably in the range of 0.8 to 2%.

Mn is an effective strengthening element relative to C and necessary at least 0.8%. However, excess amount of Mn gives negative influence on toughness and weldability. Therefore, the upper limit is preferable to be 2%.

Nb is desirable in the range of 0.01 to 0.06%.

Nb forms a carbon nitride compound and suppresses particle growth at the time of heating of the quenching treatment. When Nb is dissolved in austenite grains, hardenability is improved ensuring strength. In the view of ensuring strength, the Nb content is required to be at least 0.01%. However, when the content exceeds 0.06%, not only weldability is lowered but also hardenability is excessively increased by the increase of the content of dissolved Nb, with the result that toughness is decreased. Therefore, the upper limit is specified preferably to be 0.06%.

Al is desirably in the range of 0.01 to 0.06%.

Al is an effective element as a deoxidation agent and suppresses particle growth at the time of heating of the quenching treatment since Al is precipitated as AlN. To obtain the effect, Al is required to be at least 0.01%. However, when the Al content exceeds 0.06%, scars frequently give rise in the surface of an ingot. Therefore, the upper limit is specified to be 0.06%.

N is desirably in the range of 0.002 to 0.01%. As precipitated as AlN, N has grain growth suppressing effect at the time of heating in the quenching treatment. To obtain the effect, N is required to be at least 0.002%. However, when the N content exceeds 0.01%, the toughness of a welded portion is lowered. Therefore, the upper limits is specified to be 0.06%.

The component of the steel of the present invention is based on the above-mentioned formulation. Higher grade steel can be obtained by adding one or more than two kinds of elements selected from Cu, Ni, Cr, Mo, V, Ti, and Ca in the following content to the above-mentioned formulation.

Cu is limited in the range of 0.5% or less.

Cu improves strength and is effective in preventing hydrogen induced cracking, however, the excess content of Cu damages hot working ability. Therefore, the upper limit is specified to be 0.5%.

Cr is limited in the range of 0.3% or less.

Cr is effective in improving strength, but the excess content of Cr deteriorates toughness. Therefore, the upper limit is specified to be 0.3%.

Mo is to 0.3% or less.

Mo contributes to improving the strength of the steel and the formation of the bentonite matrix, however, the excess content of Mo damages toughness and weldability. Therefore, the upper limit is specified to be 0.3%.

V is to 0.1% or less.

V is an important element to improve the strength of the steel, however, the excess content of V damages toughness and weldability. Therefore, the upper limit is specified to be 0.1%.

Ti is to 0.1% or less.

Ti suppresses particle growth as nitrides at the time of heating of the quenching treatment, however, when the content of Ti exceeds 0.05%, the suppression effect of the particle growth is saturated and toughness is damaged. Therefore, the upper limit is specified to be 0.01%.

Ca is in the range of 0.0002 to 0.01%.

Ca is effective in the sape controlling of sulfide, thereby contributing to improvement in toughness. To obtain the effect, Ca is required to be added in a content of 0.0002% or more, however, the excess content of Ca lowers toughness and weldability. Therefore, the upper limit is specified to be 0.01%.

Other inevitable impurities are not limited as long as they do not damage manufacturing the bend pipe. Among them, P promotes temper embrittlement and gives negative influence on low temperature toughness. Therefore. the inevitable impurities are desirable to be 0.02% or less.

Now, the features of the tempering step which are characteristics of the present invention will be explained. The temperature is limited at least 250°C, above which YS shows a higher value than that of the pipe performed quenching alone, and at most 500°C, until which no toughness deterioration occurs due to the precipitation hardening caused by carbon nitride of Nb and V and the like.

Holding time is not particularly restricted. Since effective improvement is observed in YS and toughness even if the holding time is 30 minutes, conventionally used long holding times, for example, one hour per inch of thickness of pipe is not required. Holding the steel at the tempering temperature for a long time generally induces softening. Therefore, the holding time is desirably to be approximately 30 minutes.

The tempering treatment is carried out generally in a heating furnace but not restricted by that.

In the heating of the bending step, the straight pipe is generally heated to the Ac$_3$ point or more, thereby obtaining an austenitic structure, and a desired structure is obtained by the successive treatment. In order to appropriately content of dissolved Nb in austenitic grains as well as to suppress growth of austenitic grains, the heating temperature is desirable to be 900 to 1,050°C. By heating to the above-mentioned temperature range, a preferable balance between strength and toughness can be obtained.

The holding time of this heating process is desirably short so as to prevent the growth of austenitic grains. The desired short time heating is attained by the induction heating, but the heating method is not restricted the induction heating.

The heating rate in the heating step is desired to be 3°C/sec or more and the holding time is desired to be within 10 minutes.

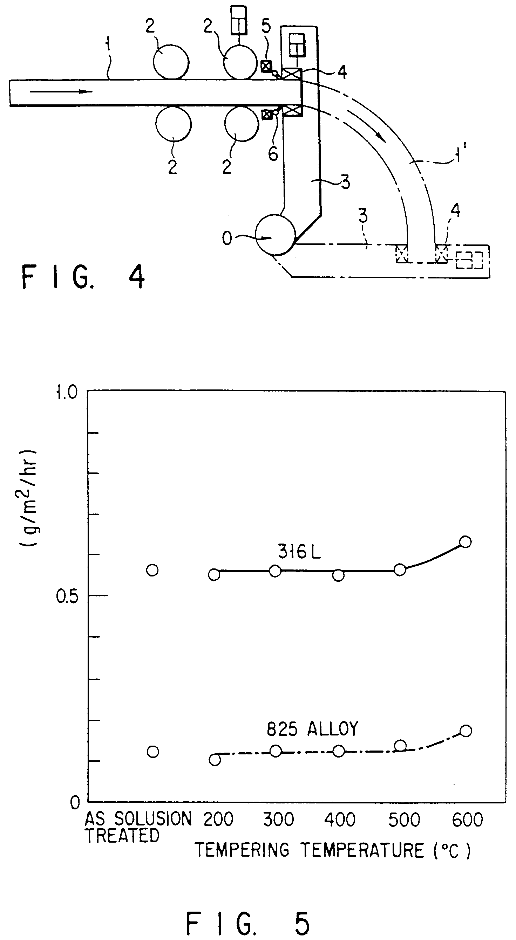

The bending of the straight pipe at this temperature, for example, can be performed by use of the device shown in Fig. 4. In Fig. 4, the straight pipe 1, before processing, is held by a clamp 4 attached to an arm 3 which can be rotated around a fulcrum 0 located at one end thereof. The straight pipe is pushed toward the right via guide rollers 2 and heated to the austenitic range, i. e., a temperature of the Ac$_3$ point or more, by induction heating coils 5 positioned behind the arm at the initial location before rotating. Since the heated straight pipe is low in deformation resistance, the pipe is bent. The pipe while being bent is cooled with cooling water released from a spray nozzle 6 placed behind the inducing coils, thereby, performing the quenching to form the bend pipe 1 as quenched.

The above-mentioned bending method is one of examples. The present invention may be carried out by methods other than the above-mentioned one.

The conventional quenching condition can be applied to the quenching step of the present invention. The cooling rate at the quenching step is desirably 8°C/sec or more.

The bend pipe of the present invention includes not only a seamless steel pipe but also a welding steel pipe.

In this case, if a welding metal is adjusted to the same composition as a base material, i.e., the above-mentioned composition, the strength and the toughness of the welded portion as well as the heat affected zone would be improved by the above-mentioned heat treatment.

In the foregoing, it is described the case that a bend pipe is composed of the above-mentioned low alloy steel alone. The present invention can be applied to the clad bend pipe using the above-mentioned low alloy steel as a base material and high corrosion resistant steel such as stainless steel disposed inside thereof as a clad material.

As mentioned before, the strength and the toughness of the base material i. e., low alloy steel are improved by the above heating treatment, at the same time, the solution treatment of the high corrosion resistant steel which forms the inside of the pipe can be performed. The solution treatment is desirably carried out at a temperature of 900 to 1,150°C which is specified by the JIS standard G4304, and 4902. Thereafter, even the pipe is tempered at a temperature in the range of 250 to 500°C, corrosion resistance can be maintained at the same level as before the treatment.

The effect of the tempering temperature on the corrosion resistance of the high corrosion resistance alloy of a solid solution state will be described in the following paragraph.

In Fig. 5, a corrosion rate is shown when the ASTM, UNS No. S31603(316L) and 825 alloy are tempered at various temperatures. In the solution treatment, the alloy was held at 1,030°C which is the same temperature as the bending step, and then cooled at an average cooling rate of 10°C/sec from 800°C to 400°C. In the tempering treatment, the alloy was held at various temperatures from 200 to 600°C for 30 minutes, and then cooled in air. As the corrosion test, sulfuric acid, ferric sulfate test based on the JIS standard G 0572 i. e., the Streicher test, was employed.

7

As shown in Fig. 4, in tempering temperatures of 500°C or less, the alloy No. 316L and 825 exhibit the same corrosion rate as that of the alloy performed solution treatment alone. In the intergranular corrosion resistance, a corrosion rate is varied depending on not only the tempering temperature but also the tempering time. However, in due consideration of the fact that the purpose of the tempering treatment is to improve YS and the toughness of the base material more than that before solution treatment, it is not necessary that the tempering time is longer than 30 minutes.

Now, the Examples of the present invention will be described in detail.

The welded steel pipes having a composition formula shown in Table 1 were treated by the device shown in the above-described Fig. 5 in accordance with the condition shown in Table 2 as well as that will be described later. After that, a part of the steel pipes was removed and the remaining steel pipes were tempered in a furnace.

The results of the tensile test, the Charpy test, and DWTT with respect to the conventional bend pipes and those of the present invention are shown in Table 2. The cooling rate at the time of the quenching treatment is 10 to 50°C/sec and the standing time at the time of the tempering treatment is 30 minutes. A test piece was taken from the "belly" side of the bend pipe (the compressed side). To evaluate the only quenching-performed bend pipe in the tensile test, use is made of the rod test piece taken from the pipe without straightening. To evaluate the tensile of the tempered bend pipe, use is made of the overall thickness test piece taken from the pipe with straightening.

As shown in Table 2, it was confirmed that the bend pipe manufactured by the method of the present invention has the strength and the toughness higher than those of the conventional bend pipe. Accordingly, the effect of the present invention is demonstrated.

Table 1

| Sample No. | Outer diameter (mm) | Pipe thickness (mm) | Chemical composition (wt%) | | | | | | | | |
|---|---|---|---|---|---|---|---|---|---|---|---|
| | | | C | Si | Mn | P | S | Cu | Ni | Cr | Mo |
| 1 | 508.0 | 20.6 | 0.02 | 0.05 | 1.95 | 0.008 | 0.001 | – | – | – | – |
| 2 | 609.6 | 20.6 | 0.07 | 0.28 | 1.09 | 0.013 | 0.001 | – | – | – | – |
| 3 | 406.4 | 12.7 | 0.08 | 0.45 | 0.82 | 0.009 | 0.001 | – | – | – | – |
| 4 | 609.6 | 25.4 | 0.05 | 0.26 | 1.52 | 0.010 | 0.002 | 0.35 | 0.20 | – | – |
| 5 | 508.0 | 20.6 | 0.08 | 0.25 | 0.81 | 0.008 | 0.001 | – | 0.96 | – | – |
| 6 | 609.6 | 23.5 | 0.03 | 0.29 | 1.55 | 0.010 | 0.001 | – | – | 0.25 | – |
| 7 | 508.0 | 20.6 | 0.03 | 0.25 | 1.58 | 0.012 | 0.001 | – | – | – | 0.26 |
| 8 | 711.2 | 17.0 | 0.04 | 0.26 | 1.48 | 0.008 | 0.001 | – | – | – | – |
| 9 | 609.6 | 15.9 | 0.07 | 0.27 | 1.50 | 0.009 | 0.001 | – | – | – | – |

(Continued)

Table 1

| Sample No. | Chemical composition (wt%) | | | | | | Carbon equivalent |
|---|---|---|---|---|---|---|---|
| | Nb | V | Ti | Al | N | Ca | |
| 1 | 0.046 | – | – | 0.056 | 0.0023 | – | 0.35 |
| 2 | 0.020 | – | – | 0.018 | 0.0035 | – | 0.28 |
| 3 | 0.012 | – | – | 0.012 | 0.0038 | – | 0.22 |
| 4 | 0.035 | – | – | 0.025 | 0.0043 | – | 0.34 |
| 5 | 0.034 | – | – | 0.026 | 0.0039 | – | 0.28 |
| 6 | 0.038 | – | – | 0.032 | 0.0029 | – | 0.34 |
| 7 | 0.034 | – | – | 0.027 | 0.0025 | – | 0.35 |
| 8 | 0.037 | 0.097 | – | 0.026 | 0.0031 | – | 0.31 |
| 9 | 0.011 | – | 0.045 | 0.026 | 0.0043 | – | 0.30 |

(Continued)

EP 0 586 703 A1

Table 1

| Sample No. | Outer diameter (mm) | Pipe thickness (mm) | Chemical composition (wt%) | | | | | | | | |
|---|---|---|---|---|---|---|---|---|---|---|---|
| | | | C | Si | Mn | P | S | Cu | Ni | Cr | Mo |
| 10 | 762.0 | 26.5 | 0.05 | 0.26 | 1.54 | 0.011 | 0.002 | – | – | – | – |
| 11 | 609.6 | 15.9 | 0.12 | 0.25 | 1.34 | 0.019 | 0.004 | – | – | – | 0.04 |
| 12 | 609.6 | 25.4 | 0.11 | 0.25 | 1.37 | 0.018 | 0.002 | – | – | – | – |
| 13 | 539.7 | 36.2 | 0.04 | 0.25 | 1.55 | 0.007 | 0.001 | 0.25 | 0.21 | – | – |
| 14 | 609.6 | 27.0 | 0.03 | 0.29 | 1.33 | 0.005 | 0.001 | 0.21 | 0.24 | – | – |
| 15 | 762.0 | 33.4 | 0.04 | 0.31 | 1.45 | 0.008 | 0.001 | 0.22 | 0.29 | – | 0.08 |
| 16 | 914.4 | 23.8 | 0.04 | 0.33 | 1.53 | 0.007 | 0.001 | 0.28 | 0.08 | – | – |
| 17 | 609.6 | 25.4 | 0.05 | 0.29 | 1.48 | 0.011 | 0.001 | 0.26 | 0.13 | 0.18 | – |
| 18 | 406.4 | 17.5 | 0.04 | 0.29 | 1.34 | 0.006 | 0.001 | 0.26 | 0.16 | 0.10 | – |
| 19 | 609.6 | 20.6 | 0.06 | 0.23 | 1.67 | 0.008 | 0.001 | 0.25 | 0.12 | – | 0.17 |

(Continued)

Table 1

| Sample No. | Chemical composition (wt%) | | | | | | Carbon equivalent |
|---|---|---|---|---|---|---|---|
| | Nb | V | Ti | Al | N | Ca | |
| 10 | 0.033 | – | – | 0.027 | 0.0038 | 0.0046 | 0.31 |
| 11 | – | 0.046 | – | 0.021 | 0.0045 | – | 0.38 |
| 12 | 0.033 | 0.050 | – | 0.029 | 0.0041 | – | 0.35 |
| 13 | 0.038 | – | 0.011 | 0.026 | 0.0038 | – | 0.33 |
| 14 | 0.042 | 0.056 | 0.012 | 0.035 | 0.0056 | 0.0031 | 0.30 |
| 15 | 0.042 | 0.052 | 0.011 | 0.028 | 0.0042 | 0.0022 | 0.35 |
| 16 | 0.039 | 0.065 | – | 0.034 | 0.0056 | – | 0.33 |
| 17 | 0.035 | – | 0.011 | 0.029 | 0.0043 | 0.0022 | 0.34 |
| 18 | 0.043 | 0.043 | 0.007 | 0.032 | 0.0039 | 0.0024 | 0.32 |
| 19 | 0.020 | – | 0.009 | 0.030 | 0.0045 | – | 0.39 |

EP 0 586 703 A1

Table 2

| | Sample No. | API standard grade | Bend method | | | Tensile test | | Charpy test | | DWTT 85%SATT (°C) |
|---|---|---|---|---|---|---|---|---|---|---|
| | | | Curved radivs | Quenching temp. (°C) | Tempering temp. (°C) | YS (kgf/mm$^2$) | TS (kgf/mm$^2$) | vTrs (°C) | vE-46°C temp. | |
| Conven-tional bend pipes | 8 | X52 | 3D | 1010 | | 41.9 | 61.7 | − 78 | 24.3 | −24 |
| | 11 | X65 | 3D | 1000 | 650 | 54.5 | 64.6 | − 31 | 2.9 | >+50 |
| | 12 | X65 | 5D | 950 | 640 | 48.2 | 60.5 | − 46 | 9.5 | +43 |
| | 13 | X52 | 3D | 1030 | | 41.3 | 59.3 | −118 | 42.8 | −43* |
| | 14 | X52 | 5D | 1050 | | 41.2 | 59.3 | − 62 | 25.2 | + 5 |
| | 16 | X60 | 3D | 1030 | 600 | 46.2 | 59.3 | − 97 | 40.6 | − 5 |
| Bend pipes of the present inven-tion | 1 | X65 | 5D | 1030 | 250 | 47.7 | 63.5 | −101 | 42.3 | −33 |
| | 2 | X60 | 3D | 960 | 450 | 44.6 | 55.3 | − 74 | 21.6 | −19 |
| | 3 | X60 | 3D | 950 | 350 | 43.5 | 53.1 | − 64 | 17.5 | −11 |
| | 4 | X65 | 3D | 1030 | 350 | 46.8 | 59.5 | − 90 | 36.2 | −32* |
| | 5 | X60 | 5D | 980 | 400 | 44.9 | 57.1 | − 82 | 32.6 | −25 |
| | 6 | X65 | 5D | 1030 | 400 | 47.2 | 60.6 | − 94 | 39.5 | −34 |

(Continued)

* reduced to 19mm

EP 0 586 703 A1

Table 2

| Sample No. | | API standard grade | Bend method | | | Tensile test | | Charpy test | | DWTT 85%SATT (°C) |
|---|---|---|---|---|---|---|---|---|---|---|
| | | | Curved radivs | Quenching temp. (°C) | Tempering temp. (°C) | YS (kgf/mm²) | TS (kgf/mm²) | vTrs (°C) | vE-46°C temp. | |
| 7 | Bend pipes of the present invention | X70 | 3D | 970 | 400 | 51.8 | 65.4 | -88 | 38.1 | -27 |
| 8 | | X60 | 5D | 1010 | 400 | 44.1 | 57.7 | -97 | 40.8 | -38 |
| 9 | | X60 | 5D | 1000 | 350 | 47.1 | 60.3 | -82 | 34.7 | -33 |
| 10 | | X60 | 5D | 1030 | 400 | 45.4 | 59.9 | -104 | 41.2 | -42* |
| 13 | | X60 | 3D | 1030 | 400 | 44.1 | 57.4 | -129 | 42.9 | -53* |
| 14 | | X60 | 5D | 1050 | 400 | 44.3 | 56.3 | -80 | 36.5 | -25* |
| 15 | | X65 | 3D | 1030 | 400 | 49.6 | 60.5 | -98 | 35.2 | -53* |
| 16 | | X60 | 5D | 1030 | 400 | 45.6 | 59.2 | -108 | 40.6 | -33* |
| 17 | | X65 | 5D | 1030 | 400 | 47.6 | 58.6 | -95 | 40.6 | -24 |
| 18 | | X60 | 5D | 1030 | 500 | 46.5 | 56.1 | -107 | 38.1 | -32* |
| 19 | | X70 | 5D | 980 | 400 | 52.7 | 67.6 | -98 | 35.2 | -23 |

\* reduced to 19mm

In the above tensile test, the reason why the rod test piece is used to evaluate the tensile of the quenched bend pipe, and why the overall thickness test piece is used to evaluate the tensile of the tempered pipe will be described with reference to table 3. Table 3 shows the results of the tensile test with respect to the bend pipe, composed of test sample 13 shown in Table 1, by use of the rod test pieces taken from the pipe without straightening and overall thickness test pieces taken from the pipe with straightening. As is apparent from table 3, the tensile values are higher in the overall thickness test piece when the test piece is taken from the quenched bend pipe. In contrast, the tensile value is higher in the rod test piece when the test piece is taken from the tempered bend pipe. Based on the above-results, the lower value of the two is shown in Table 2.

Table 3

| Sample No. | Tempering temp. (°C) | Overall thickness test piece with straightening base material YS (kgf/mm²) | Overall thickness test piece with straightening YS (kgf/mm²) | Rod test piece without straightening YS (kgf/mm²) | Rod test piece without straightening YS (kgf/mm²) |
|---|---|---|---|---|---|
| 13 | Queching alone | 46.8 | 61.6 | 41.3 | 59.3 |
|  | 300 | 45.0 | 58.7 | 45.1 | 57.0 |
|  | 400 | 44.1 | 57.4 | 45.5 | 56.0 |
|  | 500 | 43.6 | 55.5 | 45.4 | 54.7 |

In addition, the conventional bend pipes, Nos. 11 and 12 containing the conventional composition of the above-mentioned Table 2, have the toughness as low as vTrs > - 60°C. In Nos. 8, 13, and 14, the steel compositions of which are within the range of the present invention, have values of vTrs < - 60°C and low YS values since the tempering is not performed.

On the other hand, the tempered bend pipes of the present invention, Nos. 3, 13, and 14 are improved in YS as well as in toughness.

The conventional bend pipe having No. 16 composition within the range of the present invention has a satisfactory vTrs value, i. e., vTrs < - 60°C. However, the toughness itself is low since the tempering temperature is as high as 600°C. In contrast, the curved pipe within the range of the present invention obtained by tempering the pipe having No.16 composition exhibits excellent toughness.

In conclusion, the bend pipe according to the present invention is demonstrated as having excellent toughness at a value of vTrs < - 60°C and 85%SATT < - 10°C even though exhibiting high strength.

Hereinbelow, the Examples of the high corrosion resistant alloy clad pipe will be described.

Various clad steel pipes having compositions shown in Tables 4 and 5 were bent to form bend pipes under the bending condition shown in Table 6 by use of the bend pipe manufacturing device shown in Fig. 5, and then the bend pipes were tempered in a furnace after a part of the bend pipes was removed.

The above-obtained bend pipes were subjected to the tensile test, the Charpy test, DWTT, the intergranular corrosion test, and the pitting test. The results are shown in Table 7. The cooling rate of the quenching treatment is 10 to 50°C/sec and the holding time of the tempering treatment is 30 minutes. The test piece was taken from the belly side of the bend pipe (the compressed side). To evaluate the tensile of the bend pipe performed solution treatment, use was made of the rod test piece taken from the center of the base material without straightening. To evaluate the tensile of the tempered bend pipe, use was made of the overall test piece taken from the base material from which the clad material was removed by use of machine processing after straightening.

The intergranular corrosion test was performed in accordance with the sulfuric acid, ferric sulfate test based on the JIS standard G 0572 i. e., the so called Streicher test. The pitting test was performed in accordance with the ferric chloride corrosion test based on the JIS standard G 0578 at a temperature shown in Table 7.

Table 4

| Sample No. | Outer Diameter (mm) | Pipe thickness | | Clad material ASTM UNS NO. |
|---|---|---|---|---|
| | | Base material | Clad material | |
| 21 | 508.0 | 17.5 | 3.2 | S31603 |
| 22 | 609.6 | 17.5 | 3.2 | S31603 |
| 23 | 406.4 | 10.0 | 2.5 | N08825 |
| 24 | 609.6 | 21.2 | 3.3 | S31603 |
| 25 | 508.0 | 17.5 | 3.3 | N08825 |
| 26 | 609.6 | 20.0 | 3.3 | N08904 |
| 27 | 508.0 | 17.5 | 3.3 | N08825 |
| 28 | 711.2 | 14.7 | 3.2 | N08825 |
| 29 | 609.6 | 12.7 | 3.2 | N08904 |
| 30 | 762.0 | 23.5 | 3.2 | N08825 |
| 31 | 609.6 | 19.1 | 3.3 | S31603 |
| 32 | 508.0 | 20.6 | 3.5 | N08825 |
| 33 | 711.2 | 20.6 | 3.3 | S31503 |
| 34 | 609.6 | 15.2 | 2.2 | S31803 |
| 35 | 508.0 | 19.1 | 3.3 | N08825 |
| 36 | 609.6 | 26.1 | 3.3 | N08825 |
| 37 | 539.7 | 31.8 | 3.5 | S31603 |

Table 5

| Sample No. | Chemical composition of base material (wt%) | | | | | | | | |
|---|---|---|---|---|---|---|---|---|---|
| | C | Si | Mn | P | S | Cu | Ni | Cr | Mo |
| 21 | 0.02 | 0.05 | 1.95 | 0.008 | 0.001 | – | – | – | – |
| 22 | 0.07 | 0.28 | 1.09 | 0.013 | 0.001 | – | – | – | – |
| 23 | 0.08 | 0.45 | 0.82 | 0.009 | 0.001 | – | – | – | – |
| 24 | 0.05 | 0.26 | 1.52 | 0.010 | 0.002 | 0.35 | 0.20 | – | – |
| 25 | 0.08 | 0.25 | 0.81 | 0.008 | 0.001 | – | 0.96 | – | – |
| 26 | 0.03 | 0.29 | 1.55 | 0.010 | 0.001 | – | – | 0.25 | – |
| 27 | 0.03 | 0.25 | 1.58 | 0.012 | 0.001 | – | – | – | 0.26 |
| 28 | 0.04 | 0.26 | 1.48 | 0.008 | 0.001 | – | – | – | – |
| 29 | 0.07 | 0.27 | 1.50 | 0.009 | 0.001 | – | – | – | – |

(Continued)

EP 0 586 703 A1

Table 5

| Sample No. | Chemical composition of base material (wt%) | | | | | | Carbon equivalent |
|---|---|---|---|---|---|---|---|
| | Nb | V | Ti | Al | N | Ca | |
| 21 | 0.046 | – | – | 0.056 | 0.0023 | – | 0.35 |
| 22 | 0.020 | – | – | 0.018 | 0.0035 | – | 0.28 |
| 23 | 0.012 | – | – | 0.012 | 0.0038 | – | 0.22 |
| 24 | 0.035 | – | – | 0.025 | 0.0043 | – | 0.34 |
| 25 | 0.034 | – | – | 0.026 | 0.0039 | – | 0.28 |
| 26 | 0.038 | – | – | 0.032 | 0.0029 | – | 0.34 |
| 27 | 0.034 | – | – | 0.027 | 0.0025 | – | 0.35 |
| 28 | 0.037 | 0.097 | – | 0.026 | 0.0031 | – | 0.31 |
| 29 | 0.011 | – | 0.045 | 0.026 | 0.0043 | – | 0.30 |

(Continued)

EP 0 586 703 A1

Table 5

Chemical composition of base material (wt%)

| Sample No. | C | Si | Mn | P | S | Cu | Ni | Cr | Mo |
|---|---|---|---|---|---|---|---|---|---|
| 30 | 0.05 | 0.26 | 1.54 | 0.011 | 0.002 | - | - | - | - |
| 31 | 0.10 | 0.24 | 1.33 | 0.014 | 0.003 | - | - | - | 0.05 |
| 32 | 0.11 | 0.25 | 1.40 | 0.019 | 0.001 | - | - | - | - |
| 33 | 0.06 | 0.28 | 1.48 | 0.012 | 0.002 | - | - | - | - |
| 34 | 0.05 | 0.28 | 1.45 | 0.005 | 0.001 | 0.27 | 0.08 | - | - |
| 35 | 0.03 | 0.30 | 1.40 | 0.010 | 0.001 | 0.30 | 0.14 | 0.11 | - |
| 36 | 0.04 | 0.26 | 1.54 | 0.008 | 0.001 | 0.26 | 0.14 | - | 0.08 |
| 37 | 0.04 | 0.25 | 1.55 | 0.007 | 0.001 | 0.25 | 0.21 | - | - |

(Continued)

Table 5

| Sample No. | Chemical composition of base material (wt%) | | | | | | Carbon equivalent |
|---|---|---|---|---|---|---|---|
| | Nb | V | Ti | Al | N | Ca | |
| 30 | 0.033 | – | – | 0.027 | 0.0038 | 0.0046 | 0.31 |
| 31 | – | 0.061 | – | 0.029 | 0.0043 | – | 0.34 |
| 32 | 0.033 | 0.051 | – | 0.038 | 0.0051 | – | 0.36 |
| 33 | 0.035 | – | – | 0.027 | 0.0044 | – | 0.31 |
| 34 | 0.037 | 0.048 | 0.018 | 0.032 | 0.0047 | – | 0.32 |
| 35 | 0.045 | – | 0.009 | 0.025 | 0.0036 | – | 0.31 |
| 36 | 0.036 | 0.055 | 0.010 | 0.028 | 0.0052 | 0.0022 | 0.35 |
| 37 | 0.038 | – | 0.011 | 0.026 | 0.0038 | – | 0.33 |

EP 0 586 703 A1

Table 6

| Sample No. | | API standard grade | Bend method | | | Tensile test | |
|---|---|---|---|---|---|---|---|
| | | | Curved radivs | Quenching temp. (°C) | Tempering temp. (°C) | YS (kgf/mm$^2$) | TS (kgf/mm$^2$) |
| Conven-tional clad bend pipes | 28 | X52 | 3D | 1010 | – | 40.8 | 60.5 |
| | 31 | X60 | 5D | 1020 | – | 48.7 | 75.4 |
| | 32 | X65 | 3D | 1030 | – | 51.5 | 78.5 |
| | 37 | X52 | 3D | 1030 | – | 40.3 | 57.1 |
| Bend pipes of the present inven-tion | 21 | X65 | 5D | 1030 | 250 | 47.2 | 63.0 |
| | 22 | X60 | 3D | 1000 | 450 | 45.2 | 57.6 |
| | 23 | X60 | 3D | 1000 | 400 | 44.4 | 54.2 |
| | 24 | X65 | 3D | 1030 | 350 | 46.6 | 60.2 |
| | 25 | X60 | 5D | 980 | 400 | 43.7 | 58.4 |

(Continued)

EP 0 586 703 A1

Table 6

| | Sample No. | API standard grade | Bend method | | | Tensile test | |
|---|---|---|---|---|---|---|---|
| | | | Curved radivs | Quenching temp. (°C) | Tempering temp. (°C) | YS (kgf/mm$^2$) | TS (kgf/mm$^2$) |
| Clad bend pipes of the present invent- ion | 26 | X65 | 5D | 1030 | 400 | 47.1 | 59.5 |
| | 27 | X70 | 3D | 990 | 400 | 52.3 | 64.9 |
| | 28 | X60 | 5D | 1010 | 400 | 43.2 | 57.5 |
| | 29 | X60 | 5D | 1000 | 350 | 48.2 | 61.1 |
| | 30 | X60 | 5D | 1030 | 400 | 45.0 | 59.6 |
| | 33 | X60 | 5D | 1030 | 400 | 46.4 | 58.7 |
| | 34 | X65 | 5D | 1050 | 350 | 50.2 | 62.5 |
| | 35 | X60 | 5D | 1030 | 450 | 46.4 | 56.6 |
| | 36 | X65 | 5D | 1030 | 400 | 48.9 | 61.2 |
| | 37 | X60 | 3D | 1030 | 400 | 44.0 | 56.9 |

Table 7

| Sample No. | | Charpy test | | DWTT | Intergranular Corrosion test | Pitting test | |
|---|---|---|---|---|---|---|---|
| | | vTrs (°C) | vE-46°C (kgf·m) | 85%SATT (°C) | Corrosion test (g/m$^2$/hr) | Test temp. (°C) | Presence of pitting |
| Conventional clad bend pipes | 8 | − 70 | 17.4 | −18 | 0.11 | 30 | nil |
| | 11 | − 20 | 1.3 | >+50 | 0.52 | 14 | nil |
| | 12 | + 3 | 0.4 | >+50 | 0.12 | 30 | nil |
| | 17 | − 79 | 37.6 | −43* | 0.56 | 15 | nil |
| Clad bend pipes of the present invention | 1 | − 96 | 38.7 | −26 | 0.54 | 15 | nil |
| | 2 | − 74 | 25.1 | −18 | 0.56 | 15 | nil |
| | 3 | − 62 | 16.4 | −11 | 0.13 | 30 | nil |
| | 4 | − 84 | 34.4 | −32 | 0.52 | 15 | nil |
| | 5 | − 86 | 33.2 | −23 | 0.13 | 30 | nil |
| | 6 | − 90 | 37.8 | −32 | 0.16 | 35 | nil |

(Continued)

* reduced to 19mm

EP 0 586 703 A1

Table 7

| Sample No. | Charpy test | | DWTT | Intergranular Corrosion test | Pitting test | |
|---|---|---|---|---|---|---|
| | vTrs (°C) | vE-46°C (kgf·m) | 85%SATT (°C) | Corrosion test (g/m²/hr) | Test temp. (°C) | Presence of pitting |
| Clad bend pipes of the present invention 7 | -92 | 37.5 | -32 | 0.13 | 30 | nil |
| 8 | -94 | 39.8 | -36 | 0.11 | 30 | nil |
| 9 | -80 | 32.8 | -24 | 0.18 | 35 | nil |
| 10 | -102 | 40.1 | -40* | 0.10 | 30 | nil |
| 13 | -92 | 36.2 | -24 | 0.54 | 15 | nil |
| 14 | -106 | 43.1 | -35 | 0.40 | 25 | nil |
| 15 | -98 | 39.5 | -34 | 0.13 | 30 | nil |
| 16 | -102 | 41.3 | -42* | 0.11 | 30 | nil |
| 17 | -112 | 40.0 | -53* | 0.56 | 15 | nil |

* reduced to 19mm

The reason why the above-mentioned tensile test of the quenched bend pipe was evaluated by use of the rod test piece, and that of the tempered bend pipe was performed by use of the overall thickness test piece will be explained with reference to Table 8. Table 8 shows the results of the tensile test using the rod test pieces and the overall thickness test pieces. The former test pieces are taken from the bend pipes without straightening after the pipes are performed quenching followed by tempering at various temperatures, and the latter test pieces are taken from the bend pipes with straightening after the pipes were treated in the same procedure as in the former test pieces. As is apparent from Table 8, the overall thickness pieces show higher tensile when the quenched bend pipe is evaluated, on the contrary, the rod test pieces show high tensile strength when the tempered bend pipe is evaluated. Based on the above results, the lower tensile value of the two is shown in Table 6.

24

Table 8

| Sample No. | Tempering temp. (°C) | Overall thickness test piece with straightening base material | | Rod test piece without straightening | |
|---|---|---|---|---|---|
| | | YS (kgf/mm²) | YS (kgf/mm²) | YS (kgf/mm²) | YS (kgf/mm²) |
| 17 | Quenching alone | 46.1 | 59.9 | 40.3 | 57.1 |
| | 300 | 44.6 | 57.8 | 45.3 | 56.6 |
| | 400 | 44.0 | 56.9 | 45.6 | 55.4 |
| | 500 | 43.7 | 55.2 | 4514 | 54.5 |

As is shown in Table 7, in conventional bend pipes, 28, 31, 32, and 37, the high corrosion resistant alloy used as a clad material shows satisfactory values in corrosion resistance, however, shows an unsatisfactory value in either strength or toughness because these pipes are performed by solution treatment alone. To be more specific, No. 21 and 22 show toughness as poor as vTrs > - 60°C since the composition thereof is not within the scope of the present invention. On the other hand, Nos. 28 and 37, since the steel composition of which falls within the scope of the present invention, show toughness as excellent as vTrs < - 60°C, but have poor YS values.

The clad bend pipes, Nos. 28 and 37 which performed the tempering treatment at 400°C are improved in YS. Further the toughness is improved showing a value as high as vTrs < - 60°C and 85% SATT < - 10°C. Corrosion resistance is similar to that of the pipe performed by the solution treatment alone.

As explained in the above, according to the present invention, it is possible to manufacture the bend pipe made of low alloy steel, excellent, not only in strength but also in low temperature toughness even if it contains a low carbon equivalent. It is further possible to manufacture a clad bend pipe having high corrosion resistant alloy steel, excellent, in not only strength and toughness but also in corrosion resistance.

**Claims**

1. A method of manufacturing a bend pipe made of high tensile strength steel comprising steps a) to e) below.

   a) a step of preparing a straight pipe, wherein at least the outside portion thereof is formed by low alloy steel having the C content of 0.08% or less by weight.

   b) a step of heating said straight pipe to a temperature of the $Ac_3$ point or more of said low alloy steel,

   c) a step of obtaining a bend pipe by bending said straight pipe at said heating temperature,

   d) a step of quenching said bend pipe starting from said heating temperature immediately after the bending step, and

   e) a step of tempering said quenched pipe at a temperature in the range of 250 to 500°C.

2. The method of manufacturing a bend pipe made of high tensile strength steel according to claim 1, wherein said low alloy steel contains 0.02 to 0.08% of C, 0.05 to 0.5% of Si, 0.8 to 2.0% of Mn, 0.01 to 0.06% of Nb, 0.01 to 0.06% of Al, and 0.002 to 0.01% of N by weight and the balance of iron and inevitable impurities.

3. The method of manufacturing a bend pipe made of high tensile strength steel according to claim 1, wherein said low alloy steel contains 0.02 to 0.08% of C, 0.05 to 0.5% of Si, 0.8 to 2.0% of Mn, 0.01 to 0.06% of Nb, 0.01 to 0.06% of Al, and 0.002 to 0.01% of N by weight,

   further containing at least one selected from the group consisting of 0.5% of Cu, 1.0% or less of Ni, 0.3% or less of Cr, 0.3% or less of Mo, 0.1% or less of V, 0.05% or less of Ti, and 0.0002 to 0.01% of Ca, and

   the balance of iron and inevitable impurities.

4. The method of manufacturing a bend pipe made of high tensile strength steel according to claim 1, wherein the outside portion of said straight pipe is made of low alloy steel having the C content of 0.08% or less by weight and the inside portion of said straight pipe is a clad pipe made of high corrosion resistant alloy, and the heating temperature before said bending step is 900 to 1,150°C.

5. The method of manufacturing a bend pipe made of high tensile strength steel according to claim 4, wherein said low alloy steel contains 0.02 to 0.08% of C, 0.05 to 0.5% of Si, 0.8 to 2.0% of Mn, 0.01 to 0.06% of Nb, 0.01 to 0.06% of Al, and 0.002 to 0.01% of N by weight, and the balance of iron and inevitable impurities.

6. The method of manufacturing a bend pipe made of high tensile strength steel according to claim 4, wherein said low alloy steel contains 0.02 to 0.08% of C, 0.05 to 0.5% of Si, 0.8 to 2.0% of Mn, 0.01 to 0.06% of Nb, 0.01 to 0.06% of Al, and 0.002 to 0.01% of N by weight,

   further containing at least one selected from the group consisting of 0.5% of Cu, 1.0% or less of Ni, 0.3% or less of Cr, 0.3% or less of Mo, 0.1% or less of V, 0.05% or less of Ti, and 0.0002 to 0.01% of Ca, and

   the balance of iron and inevitable impurities.

7. The method of manufacturing a curved pipe made of high tensile strength steel according to claim 4, wherein said high corrosion resistant alloy is either austenitic stainless steel, duplex stainless steel, or ASTM UNS No. N08825 (825 alloy).

F I G.   1

F I G. 2

EP 0 586 703 A1

F I G. 3

29

F I G. 4

FIG. 5

# INTERNATIONAL SEARCH REPORT

International Application No PCT/JP92/00936

**I. CLASSIFICATION OF SUBJECT MATTER** (if several classification symbols apply, indicate all) [6]

According to International Patent Classification (IPC) or to both National Classification and IPC

Int. Cl$^5$   B21D7/16, C21D8/10

**II. FIELDS SEARCHED**

| Minimum Documentation Searched [7] | |
|---|---|
| Classification System | Classification Symbols |
| IPC | B21D7/00-7/025, 7/16, C21D8/10, C22C38/00-38/58 |

Documentation Searched other than Minimum Documentation
to the Extent that such Documents are Included in the Fields Searched [8]

| | |
|---|---|
| Jitsuyo Shinan Koho | 1926 - 1991 |
| Kokai Jitsuyo Shinan Koho | 1971 - 1991 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, B2, 63-67525 (NKK Corp.), December 26, 1988 (26. 12. 88), & BE, A1, 899854 & FR, A1, 2547750 & GB, B2, 2144148 & IT, A, 1174159 & CA, A1, 1249121 & SE, C, 462102 | 1-3 |
| A | JP, B2, 1-38851 (NKK Corp.), August 16, 1989 (16. 08. 89) | 1-3 |
| A | JP, A, 62-151545 (Kawasaki Steel Corp.), July 6, 1987 (06. 07. 87) | 1-3 |
| A | JP, B2, 63-67526 (NKK Corp.), December 26, 1988 (26. 12. 88), & BE, A1, 899854 & FR, A1, 2547750 & GB, B2, 2144148 & IT, A, 1174159 & CA, A1, 1249121 & SE, C, 462102 | 4-7 |

[*] Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| October 1, 1992 (01. 10. 92) | October 20, 1992 (20. 10. 92) |
| International Searching Authority | Signature of Authorized Officer |
| Japanese Patent Office | |

Form PCT/ISA/210 (second sheet) (January 1985)